# EUROPÄISCHE PATENTSCHRIFT

(11) **EP 3 149 814 B1**
(45) Veröffentlichungstag und Bekanntmachung des Hinweises auf die Patenterteilung: **12.02.2020**
(21) Anmeldenummer: 15723980.7
(22) Anmeldetag: 26.05.2015
(51) Int. Cl.: H01T 1/02, H01T 1/10, H01T 1/15, H01T 2/02, H01T 4/10

(54) **ÜBERSPANNUNGSABLEITER**
SURGE ARRESTER
PARAFOUDRE

(30) Priorität: 26.05.2014 DE 102014107409
(43) Veröffentlichungstag der Anmeldung: 05.04.2017
(73) Patentinhaber: Phoenix Contact GmbH & Co. KG, 32825 Blomberg (DE)
(72) Erfinder: DURTH, Rainer, 32805 Horn-Bad Meinberg (DE); SCHMUTZ, Jan-Erik, 32760 Detmold (DE)
(74) Vertreter: Gesthuysen Patent- und Rechtsanwälte
(86) Internationale Anmeldenummer: PCT/EP2015/061576
(87) Internationale Veröffentlichungsnummer: WO 2015/181158

(56) Entgegenhaltungen:
- EP-A1- 0 439 229
- WO-A2-2009/028881
- US-A- 4 198 590
- US-A- 4 485 334

## Beschreibung

Die Erfindung betrifft einen Überspannungsableiter zum Einsatz in der Stromversorgung von Niederspannungsnetzen, mit einem Gehäuse, mit zwei einander axial gegenüberliegenden Elektroden, mit einer im Inneren des Gehäuses ausgebildeten Lichtbogenbrennkammer und mit einer Zündhilfe, wobei zwischen den beiden Elektroden eine Funkenstrecke ausgebildet ist, so dass beim Zünden der Funkenstrecke zwischen den beiden Elektroden ein Lichtbogen entsteht, und wobei der axiale Abstand zwischen den Stirnseiten der beiden Elektroden so groß gewählt ist, dass die Lichtbogenspannung U_{L} größer als die erwartete Netzspannung U_{N} ist.

Wenn Überspannungen auftreten, die oberhalb der oberen Toleranzgrenze der jeweiligen Nennspannung liegen, müssen die betroffenen Geräte, Anlagen und Leitungen in möglichst kurzer Zeit mit dem Potentialausgleich kurzgeschlossen werden. Dafür werden je nach Einsatzort (Schutzzone) und Art der zu schützenden Geräte und Anlagen unterschiedliche Bauelemente verwendet. Die einzelnen Bauelemente unterscheiden sich dabei im Wesentlichen durch ihr Ansprechverhalten und ihr Ableitvermögen.

In Niederspannungsnetzen werden zum Schutz vor Überspannungen häufig Überspannungsableiter auf Basis von Funkenstrecken eingesetzt, d. h. Überspannungsableiter deren wesentlicher Bestandteil eine Funkenstrecke ist, die bei einer bestimmten Überspannung anspricht, wobei beim Zünden der Funkenstrecke zwischen den beiden Elektroden ein Lichtbogen entsteht. Da Überspannungsableiter mit Funkenstrecken auch zum Schutz vor Blitzeinschlag eingesetzt werden, können sehr hohe und steil ansteigende Ströme mit Werten bis in den dreistelligen kA-Bereich über die Funkenstrecke fließen.

Überspannungsableiter mit einer Funkenstrecke als Ableiter haben zwar den Vorteil einer hohen Stoßstromtragfähigkeit, jedoch auch den Nachteil einer relativ hohen und auch nicht sonderlich konstanten Ansprechspannung. Daher werden zur Zündung von Funkenstrecken bereits seit langem unterschiedliche Arten von Zündhilfen verwendet, mit deren Hilfe die Ansprechspannung der Funkenstrecke bzw. des Überspannungsableiters verringert wird.

Bei Überspannungsableitern der in Rede stehenden Art - mit oder ohne Verwendung einer Zündhilfe - entsteht beim Zünden der Funkenstrecke über den Lichtbogen eine niederimpedante Verbindung zwischen den beiden Elektroden, über die - gewollt - der abzuleitende hochenergetische transiente Stoßstrom fließt. Bei anliegender Netzspannung kann über diese niederimpedante Verbindung jedoch auch ein unerwünschter Netzfolgestrom fließen, was zur Zerstörung einer vorgeschalteten Sicherung führen kann. Dann ist das Gerät oder die Anlage zwar vor einer Zerstörung durch die Überspannung geschützt, die Verfügbarkeit des Geräts bzw. der Anlage ist jedoch so lange nicht gegeben, bis die zerstörte Sicherung ersetzt worden ist.

Daher besteht eine wichtige Anforderung an moderne Überspannungsableiter darin, den Lichtbogen nach abgeschlossenem Ableitvorgang möglichst schnell zu löschen, damit es auch zu einem Erlöschen bzw. Unterdrücken des Netzfolgestroms kommt. Hierzu wird in der Regel versucht, die Lichtbogenspannung, d.h. die Spannung, die zwischen den beiden Elektroden anstehen muss, damit der Lichtbogen weiter brennt, soweit zu erhöhen, dass ein auftretender Netzfolgestrom unterdrückt oder reduziert wird.

Eine Möglichkeit zur Erhöhung der Lichtbogenspannung besteht darin, die Lichtbogenlänge nach dem Ansprechen der Funkenstrecke zu vergrößern. Eine andere Möglichkeit, die Lichtbogenspannung nach dem Ableitgang zu erhöhen, besteht in der Kühlung des Lichtbogens durch die Kühlwirkung von Isolierstoffwänden sowie die Verwendung von Gas abgebenden Isolierstoffen. Weitere bekannte Maßnahmen zur Erhöhung der Lichtbogenspannung sind die Lichtbogenvervielfachung, d.h. die Aufteilung des einen Lichtbogens in mehrere Lichtbögen durch die Anordnung von Löschblechen, sowie die Einengung des Lichtbogens in einen schmalen Spalt zwischen den beiden Elektroden. Darüber hinaus sind auch Kombinationen der zuvor beschriebenen Maßnahmen möglich.

Das Verfahren der Erhöhung der Lichtbogenspannung durch Kühlung des Lichtbogens beispielsweise mittels eines Gas abgebenden Isolierstoffs ist dabei relativ stark von der Höhe und der Dauer des abzuleitenden Stoßstromes abhängig. Sehr hohe Stoßströme führen zu einer starken Beblasung des Lichtbogens durch die Gas abgebenden Isolierstoffwände, so dass derartige hohe Stoßströme mit hohen Energieumsätzen in der Regel zu einer schnellen Unterdrückung von Netzfolgeströmen führen. Bei geringeren Stoßströmen kann dagegen die durch den Stoßstrom selber hervorgerufene Beblasung des Lichtbogens unter Umständen nicht zu einer ausreichenden Erhöhung der Lichtbogenspannung führen, so dass es erst verspätet zu einer Unterdrückung des Netzfolgestromes kommt.

Die zur Unterdrückung eines Netzfolgestromes gewollte Erhöhung der Lichtbogenspannung weist dabei unabhängig von dem realisierten Verfahren zur Erhöhung der Lichtbogenspannung den Nachteil auf, dass es aufgrund der erhöhten Lichtbogenspannung während des Ableitens des Stoßstromes zu einem erhöhten Energieumsatz innerhalb des Überspannungsableiters, insbesondere innerhalb der Lichtbogenbrennkammer des Überspannungsableiters kommt. Dies führt insbesondere bei weitgehend geschlossenen Überspannungsableitern, d.h. bei gekapselten, nicht ausblasenden Überspannungsableitern, zu Problemen, da die in Wärme umgesetzte Energie die Lichtbogenbrennkammer nur relativ langsam verlassen kann, so dass die die Lichtbogenbrennkammer umgebenden Materialien über eine relativ lange Zeit sehr hohen Temperaturen ausgesetzt sind. Besonders gefährdet sind dabei die zur Beblasung und Kühlung des Lichtbogens verwendeten Isolierstoffe. Darüber hinaus müssen die Überspannungsableiter auch in der Lage sein, den beim Ableiten eines Stoßstromes auftretenden hohen Drücken Stand zu halten, was aufwendige Konstruktionen erfordert.

Aus der DE 103 38 835 A1 ist ein eingangs beschriebener Überspannungsableiter bekannt, bei dem das Auftreten eines Netzfolgestromes dadurch verhindert wird, dass der Abstand zwischen den beiden Elektroden so groß gewählt ist, dass die Lichtbogenspannung größer als die erwartete Netzspannung ist. Damit die Ansprechspannung dieses Überspannungsableiters durch den relativ großen Abstand der beiden Elektroden der Funkenstrecke nicht zu groß ist, ist eine Zündhilfe vorgesehen, durch die die gewünschte Ansprechspannung des Überspannungsableiters eingestellt werden kann.

Bei dem aus der DE 103 38 835 A1 bekannten Überspannungsableiter weist die zylindrische Lichtbogenbrennkammer einen relativ geringen Durchmesser auf, der dem Durchmesser der freien Stirnseiten der einander gegenüberliegenden Elektroden entspricht. Darüber hinaus ist die Lichtbogenbrennkammer nahezu vollständig von einem isolierenden Material umgeben, was sowohl zu einer Kühlung als auch zu einer Einengung des Lichtbogens führt. Beides führt - wie zuvor beschrieben - zu einer gewollten Erhöhung der Lichtbogenspannung und damit jedoch auch zu einem hohen Energieumsatz innerhalb der Lichtbogenbrennkammer.

Um die nach dem Zünden des Lichtbogens innerhalb der Lichtbogenbrennkammer entstehende Wärme abzuführen, sind bei dem bekannten Überspannungsableiter Kühlkanäle im Gehäuse ausgebildet, die mit der Lichtbogenbrennkammer verbunden sind. So können die in der Lichtbogenbrennkammer beim Ableitvorgang durch den Lichtbogen produzierten heißen, ionisierten Gase aus der Lichtbogenbrennkammer und schließlich auch aus dem Gehäuse abgeführt werden. Damit die aus dem Gehäuse ausströmenden Gase keine zu hohe Temperatur aufweisen, müssen die Kühlkanäle so ausgebildet sein, dass sie eine ausreichend lange Wegstrecke zur Verfügung stellen, die das Plasma im Gehäuse entlangströmt. Bei dem aus der DE 103 38 835 A1 bekannten Überspannungsableiter wird dies dadurch erreicht, dass das metallische Gehäuse zweiteilig ausgebildet ist und die beiden Gehäusehälften koaxial zueinander angeordnet sind. Zwischen den beiden Gehäuseteilen sind dabei schraubenförmige Kühlkanäle angeordnet, die zur Verschraubung der beiden Gehäuseteile miteinander dienen und durch die gleichzeitig auch das Plasma strömen kann.

Damit bei dem bekannten Überspannungsableiter die auftretenden hohen Drücke und Temperaturen beherrscht werden können, sind die konstruktiven Anforderungen an das Gehäuse und die die Lichtbogenbrennkammer umgebenden Materialien sehr hoch. Insbesondere muss zur Gewährleistung einer ausreichenden mechanischen Stabilität die Wandstärke der beiden Gehäuseteile relativ groß sein, was zu einem entsprechend vergrößerten Außendurchmesser des Gehäuses insgesamt führt.

Die WO 2009/028881 A1 offenbart einen Überspannungsableiter mit einem zylindrischen Gehäuse und zwei einander gegenüberliegenden Elektroden, die an den beiden Stirnseiten des Gehäuses angeordnet sind und dieses luftdicht abschließen. Die beiden Elektroden weisen jeweils einen in das Innere des Gehäuses ragenden Fortsatz auf, zwischen denen ein Entladungsspalt ausgebildet ist. Der Durchmesser der im Inneren des Gehäuses ausgebildeten Lichtbogenbrennkammer ist etwa doppelt so groß wie der Durchmesser der Fortsätze der beiden Elektroden, so dass die Fortsätze der Elektroden einen radialen Abstand zur Innenwand des Gehäuses aufweisen. Als Zündhilfe ist eine Zündelektrode vorgesehen, die außen am Gehäuse angeordnet und damit von der Lichtbogenbrennkammer im Inneren des Gehäuses beabstandet ist.

Der vorliegenden Erfindung liegt die Aufgabe zugrunde, einen eingangs beschriebenen Überspannungsableiter derart weiterzuentwickeln, dass die zuvor genannten Nachteile nach Möglichkeit vermieden werden. Insbesondere soll dabei erreicht werden, dass der Energieumsatz innerhalb des Überspannungsableiters beim Ableiten des Stoßstromes möglichst gering ist, wobei ein Netzfolgestrom möglichst schnell gelöscht oder das Auftreten eines Netzfolgestroms verhindert werden soll.

Diese Aufgabe ist bei dem eingangs beschriebenen Überspannungsableiter mit den Merkmalen des Patentanspruchs 1 gelöst. Die Lichtbogenbrennkammer weist einen inneren Bereich und einen Expansionsbereich auf, in den sich der Lichtbogen nach dem Zünden ausbreiten kann. Der innere Bereich ist zwischen den beiden einander gegenüberliegenden Elektroden angeordnet und von den Stirnseiten der beiden Elektroden axial begrenzt, wobei der Expansionsbereich an eine Längsseite des inneren Bereichs angrenzt und zumindest zwei Seitenwände des Expansionsbereichs zumindest teilweise aus isolierenden Material bestehen. Die dem Expansionsbereich gegenüberliegende Längsseite des inneren Bereichs ist geschlossen, so dass sich der Lichtbogen nur in eine Richtung ausbreiten kann. Mit dieser Ausgestaltung des Überspannungsableiters, bei der die beiden Elektroden an einer Seite der Lichtbogenbrennkammer angeordnet sind, ist eine kompakte Bauform des Überspannungsableiters erreichbar.

Im Unterschied zu dem aus der DE 103 38 835 A1 bekannten Überspannungsableiter, bei dem die Lichtbogenbrennkammer nur zwischen den einander gegenüberliegenden Stirnseiten der Elektroden ausgebildet und im Wesentlichen zylinderförmig geschlossen ist, also nur einen "inneren Bereich" aufweist, weist bei dem erfindungsgemäßen Überspannungsableiter die Lichtbogenbrennkammer zusätzlich noch einen Expansionsbereich auf, in den sich der Lichtbogen ausbreiten kann. Die Lichtbogenbrennkammer weist somit ein wesentlich größeres Volumen auf, wobei sich der Lichtbogen nicht nur in axialer Richtung der Lichtbogenbrennkammer sondern auch senkrecht zur Achse der Lichtbogenbrennkammer, d.h. senkrecht zur Verbindungslinie zwischen den beiden einander gegenüberliegenden Elektroden ausbreiten kann. Dadurch kann sich der Lichtbogen in Abhängigkeit von der momentanen Stromstärke des abzuleitenden Stoßstromes so ausdehnen, dass er die jeweils energetisch günstigste Form annimmt, so dass die Lichtbogenspannung bei einem Anstieg der Amplitude des Stoßstromes nicht oder nur relativ gering ansteigt. Es wird so eine näherungsweise Linearisierung der Lichtbogenspannung während des Ableitvorgangs erreicht, wobei durch den gewählten relativ großen axialen Abstand zwischen den Stirnseiten der beiden Elektroden und die Ausgestaltung der Lichtbogenbrennkammer erreicht wird, dass die Lichtbogenspannung oberhalb der erwarteten Netzspannung liegt.
Beim Ableiten eines Stoßstromes über die gezündete Funkenstrecke führt ein anstehender Lichtbogen normalerweise dazu, dass von dem die Lichtbogenbrennkammer umgebenden Isolierstoff Gas abgegeben wird, was zu einer Kühlung des Lichtbogens und damit zu einem Anstieg der Lichtbogenspannung führt. Dadurch, dass bei dem erfindungsgemäßen Überspannungsableiter die Lichtbogenbrennkammer neben einem schmalen inneren Bereich noch einen angrenzenden Expansionsbereich aufweist, hat der Lichtbogen die Möglichkeit, sich in diesen Expansionsbereich auszubreiten, was zu einer Vergrößerung des den Lichtbogen umgebenden Volumens und damit zu einer geringeren Kühlung des Lichtbogens führt. Dies führt wiederum zu einer geringeren Erhöhung der Lichtbogenspannung, was zu der gewollten Verringerung des Energieumsatzes innerhalb der Lichtbogenbrennkammer des Überspannungsableiters führt. Da sich gleichzeitig die von dem Lichtbogen abgegebene Energie nicht mehr nur noch auf das Volumen des inneren Bereichs der Lichtbogenbrennkammer sondern auf ein um das Volumen des Expansionsbereichs vergrößertes Volumen verteilt, führt dies zu einer weiter verringerten Belastung und damit auch zu einer geringeren Schädigung des die Lichtbogenbrennkammer zumindest teilweise umgebenden isolierenden Materials bzw. der aus isolierendem Material bestehenden Seitenwände.

Durch die Ausbildung der Lichtbogenbrennkammer mit einem Expansionsbereich, in den sich der Lichtbogen ausbreiten kann, wobei zumindest zwei Seitenwände des Expansionsbereichs zumindest teilweise aus isolierenden Material bestehen, wird ein von isolierendem Material begrenzter Isolierspalt gebildet, der senkrecht zur Verbindungslinie zwischen den beiden einander gegenüberliegenden Elektroden eine wesentliche Erstreckung aufweist, wobei diese Erstreckung vorzugsweise wesentlich größer als die entsprechende Erstreckung der Stirnseiten der beiden Elektroden ist.

Damit sich der Lichtbogen nach dem Zünden der Funkenstrecke und während des Ableitens des Stoßstromes derart ausbreiten bzw. aufweiten kann, dass er möglichst in seinem Energieminimum brennt, weist der Expansionsbereich vorzugsweise eine Höhe H auf, die größer als die Höhe h des inneren Bereichs und damit auch größer als die entsprechende Erstreckung der Stirnseiten der Elektroden ist. Vorzugsweise ist die Höhe H des Expansionsbereichs mindestens doppelt so groß, insbesondere mindestens 3-mal so groß wie die Höhe h des inneren Bereichs.

Gemäß einer weiteren vorteilhaften Ausgestaltung der Erfindung weist der Expansionsbereich eine Länge L auf, die größer als die Länge 1 des inneren Bereichs ist, d. h. die Länge L des Expansionsbereichs ist größer als der Abstand zwischen den Stirnseiten der beiden Elektroden. Mindestens eine Elektrode rangt dann nicht nur mit ihrer Stirnseite sondern mit einer entsprechenden Länge in die Lichtbogenbrennkammer hinein, so dass die Elektrode mit einer ihrer Längsseiten an den Expansionsbereich angrenzt. Vorzugsweise ist auch hierbei eine symmetrische Anordnung der Elektroden in der Lichtbogenbrennkammer realisiert, so dass beide Elektroden gleich weit in die Lichtbogenbrennkammer hineinragen. Hierdurch besteht die Möglichkeit, dass die Fußpunkte des Lichtbogens nach dem Zünden auf der Längsseite beider Elektroden nach außen wandern. Hierdurch verlängert sich die Länge des Lichtbogens, was zu einer Erhöhung der Lichtbogenspannung führt. Da der Lichtbogen jedoch gleichzeitig aus dem engen inneren Bereich herauswandert, wird eine Einengung des Lichtbogens vermieden, was ansonsten ebenfalls zu einer Erhöhung der Lichtbogenspannung führen würde. Im Endeffekt kann sich der Lichtbogen so stark in den Expansionsbereich ausweiten, in dem der Lichtbogen aufgrund des größeren Volumens weniger stark gekühlt wird, dass der Lichtbogen seine energetisch günstigste Form annimmt, so dass im Ergebnis die Lichtbogenspannung näherungsweise konstant bleibt.

Insgesamt gibt es eine Vielzahl von Möglichkeiten, wie die Lichtbogenbrennkammer konstruktiv und geometrisch ausgestaltet werden kann. Gemäß einer bevorzugten Ausführungsform ist der Expansionsbereich dabei so ausgebildet, dass er sich im Querschnitt vom inneren Bereich nach außen erweitert. Der Expansionsbereich weist somit in dem Bereich, in dem er an den inneren Bereich der Lichtbogenbrennkammer angrenzt, eine geringere Breite, d. h. eine geringere Erstreckung senkrecht zur Verbindungslinie zwischen den beiden Elektroden auf, als in einem vom inneren Bereich beabstandeten Bereich. Die Erweiterung des Expansionsbereichs kann dabei linear verlaufen, so dass der Expansionsbereich einen etwas V-förmigen Querschnitt aufweist, oder nicht linear, beispielsweise bogenförmig oder auch stufenförmig.

Gemäß einer weiteren bevorzugten Ausgestaltung der Erfindung sind die Seitenwände des Expansionsbereich derart ausgebildet, dass der Expansionsbereich einen Bereich aufweist, in dem der Abstand zwischen den Seitenwänden verringert ist, d. h. der Expansionsbereich weist eine Engstelle auf. Hierdurch wird der Lichtbogen stärker eingeengt und durch die benachbarten Seitenwände stärker gekühlt, wenn er durch die Engstelle verläuft. Ist die Engstelle auf einen kleinen Bereich beschränkt, der nur eine begrenzte Höhe aufweist, so wird der Lichtbogen dazu neigen, außerhalb der Engstelle zu verlaufen, um eine Einengung und damit eine stärkere Kühlung zu vermeiden. Die Engstelle ist dabei vorzugsweise in axialer Richtung gesehen mittig zwischen den beiden Elektroden angeordnet, so dass es zu einer symmetrischen Aufweitung des Lichtbogens kommt. Die zuvor beschriebene Engstelle kann beispielsweise dadurch erreicht werden, dass die Seitenwände des Expansionsbereichs zumindest teilweise ballig ausgebildet sind, so dass der Expansionsbereich zumindest bereichsweise einen konkaven Querschnitt hat.

Gemäß einer alternativen Ausgestaltung erstreckt sich der Bereich, in dem der Abstand zwischen den Seitenwänden verringert ist, d. h. die Engstelle, im wesentlichen senkrecht zur Verbindungslinie zwischen den beiden Elektroden und über die ganze Höhe H des Expansionsbereichs. Kommt es zur Zündung der Funkenstrecke, so dass ein Lichtbogen ansteht, so bewirkt der Lichtbogen, dass das angrenzende isolierende Material in der linien- oder bandförmigen Engstelle mehr Gas abgibt, als im angrenzenden Expansionsbereich, in dem der Lichtbogen einen größeren Abstand von den Seitenwänden aufweist. Dadurch kommt es zu zwei entgegengesetzt zueinander gerichteten Gasströmen aus der Engstelle in den angrenzenden Expansionsbereich. Dies führt nach dem Ableitvorgang des Stoßstromes zu einer verstärkten und schnelleren Entionisierung der Engstelle, so dass die Gefahr einer erneuten Zündung der Funkenstrecke bei anstehender Netzspannung verringert wird.

Um eine unterschiedliche Kühlung des Lichtbogens innerhalb des Expansionsbereichs zu erreichen, wodurch ebenfalls die Lichtbogenspannung in Richtung einer möglichst konstanten Lichtbogenspannung während des Ableitvorgangs beeinflusst werden kann, ist vorzugsweise vorgesehen, dass zumindest die Seitenwände des Expansionsbereichs zumindest bereichsweise aus einem harten, gasenden Isolierstoff, beispielsweise POM bestehen. In Abhängigkeit von der Geometrie der Lichtbogenbrennkammer, insbesondere des Expansionsbereichs, und der Anordnung von Bereichen der Seitenwände aus gasendem Isolierstoff können somit unterschiedliche Zonen geschaffen werden, in denen der Lichtbogen unterschiedlich stark gekühlt wird.

Zur gezielten Beeinflussung der Strömung des heißen ionisierten Gases innerhalb der Lichtbogenbrennkammer, und um ein gezieltes Abströmen des Plasmas aus der Lichtbogenbrennkammer zu ermöglichen, ist gemäß einer Ausführungsvariante der Erfindung vorgesehen, dass in mindestens einer der Seitenwände des Expansionsbereichs mindestens eine Öffnung ausgebildet ist, durch die heißes ionisiertes Gas aus der Lichtbogenbrennkammer ausströmen kann. Vorzugsweise ist dabei vorgesehen, dass in einer oder auch in beiden Seitenwänden mehrere Öffnungen angeordnet sind, wobei die Öffnungen dann bevorzugt auf einer Linie senkrecht zur Verbindungslinie zwischen den Elektroden angeordnet sind. Durch die Ausbildung der Öffnungen kann der Druck innerhalb der Lichtbogenbrennkammer gezielt verringert werden. Darüber hinaus können durch die Öffnungen zusätzliche Kühleffekte erreicht werden.

Damit bei dem erfindungsgemäßen Überspannungsableiter die Ansprechspannung trotz des relativ großen Abstands zwischen den Stirnseiten der beiden Elektroden nicht zu groß ist, ist eine Zündhilfe vorgesehen, durch die die gewünschte Ansprechspannung des Überspannungsableiters gewählt bzw. eingestellt werden kann. Grundsätzlich kann dabei die Zündung der Funkenstrecke auf unterschiedliche Arten erfolgen. So kann beispielsweise eine Zündhilfe vorgesehen sein, die zumindest ein Zündelement und eine Zündelektrode umfasst. Das Zündelement und die Zündelektrode stehen dabei mit der Lichtbogenbrennkammer in Berührung, wobei das Zündelement auf der einen Seite mit der einen Elektrode und auf der anderen Seite mit der Zündelektrode elektrisch leitend verbunden ist. Von ihrem grundsätzlichen Aufbau kann die bei dem erfindungsgemäßen Überspannungsableiter verwendete Zündhilfe so aufgebaut sein, wie auch die in der DE 103 38 835 A1 beschriebene Zündhilfe aufgebaut ist.

Gemäß einer bevorzugten Ausgestaltung weist die zwischen den beiden Elektroden angeordnete Zündhilfe einen längeren, resistiven, d. h. widerstandsbehafteten Bereich und einen kurzen Isolationsbereich auf, wobei der resistive Bereich auf der einen Seite mit der einen Elektrode und auf der anderen Seite mit dem Isolationsbereich verbunden ist. So muss zur Zündung der Funkenstrecke nur der kurze Isolationsbereich überschlagen werden, während der Lichtbogen nach dem Zünden zwischen den wesentlich weiter voneinander beabstandeten Elektroden brennt. Hierdurch kann der Abstand zwischen den Elektroden so groß gewählt werden, dass die Lichtbogenspannung U_{L} größer als die erwartete Netzspannung U_{N} ist, so dass ein Netzfolgestrom schnell gelöscht oder das Auftreten eines Netzfolgestroms sogar ganz verhindert werden kann.

Wenn die Amplitude des abzuleitenden Stoßstromes nach dem Zünden der Funkenstrecke ansteigt, breitet sich der Lichtbogen in den Expansionsbereich aus und das im inneren Bereich entstandene Plasma strömt ebenfalls aus dem kleinen inneren Bereich in den größeren Expansionsbereich. Da sich der Lichtbogen nun innerhalb des größeren Volumens des Expansionsbereichs befindet, ist die kühlende Wirkung der Seitenwände des Expansionsbereichs auf den Lichtbogen geringer, so dass die Lichtbogenspannung nicht weiter ansteigt. Zum Ende des abzuleitenden Stoßstromes, wenn dessen Amplitude wieder abnimmt, reduziert sich sowohl die Beblasung des Lichtbogens aufgrund der von den Isolierstoffwänden abgegebenen Gase als auch der durch den Lichtbogen selber erzeugte Druck innerhalb der Lichtbogenbrennkammer, so dass sich auch die Aufweitung des Lichtbogens verringert. Der Lichtbogen brennt dann wieder näher am inneren Bereich der Lichtbogenbrennkammer, d. h. näher am Zündbereich, wo die Kühlung durch die aus isolierendem Material bestehenden Seitenwände größer ist. Hierdurch kann erreicht werden, dass die Lichtbogenspannung auch am Ende des Ableitvorgangs nicht unter die erwartete Netzspannung fällt.

Insgesamt wird damit ein Überspannungsableiter zur Verfügung gestellt, bei dem der beim Ableiten eines Stoßstromes in der Lichtbogenbrennkammer entstehende Energieumsatz dadurch reduziert ist, dass der Lichtbogen während des Ableitvorgangs stets eine Form einnimmt, die energetisch günstig ist, so dass die Lichtbogenspannung U_{L} näherungsweise konstant bleibt. Dabei wird durch den relativ großen axialen Abstand zwischen den Stirnseiten der Elektroden und die Ausgestaltung der Lichtbogenbrennkammer erreicht, dass die Lichtbogenspannung U_{L} stets oberhalb der erwarteten Netzspannung U_{N} ist, d. h. nicht unter einen Mindestwert fällt. Ein solcher Mindestwert für die Lichtbogenspannung U_{L} kann beispielsweise im Bereich von 350 V bis 450 V liegen. Bei dem erfindungsgemäßen Überspannungsableiter kann dies beispielsweise mit einem Abstand a zwischen den Stirnseiten der Elektroden zwischen 5 mm und 20 mm realisiert werden.

Im Einzelnen gibt es nun eine Vielzahl von Möglichkeiten, den erfindungsgemäßen Überspannungsableiter auszugestalten und weiterzubilden. Dazu wird verwiesen sowohl auf die dem Patentanspruch 1 nachgeordneten Patentansprüche, als auch auf die nachfolgende Beschreibung bevorzugter Ausführungsbeispiele in Verbindung mit der Zeichnung. In der Zeichnung zeigen
- Fig. 1: eine vereinfachte Darstellung eines Überspannungsableiters, in perspektivischer Darstellung und im Schnitt,
- Fig. 2: einen Längsschnitt durch einen Überspannungsableiter,
- Fig. 3: einen Querschnitt durch einen Überspannungsableiter, und
- Fig. 4: fünf verschiedene Varianten der Lichtbogenbrennkammer eines Überspannungsableiters.

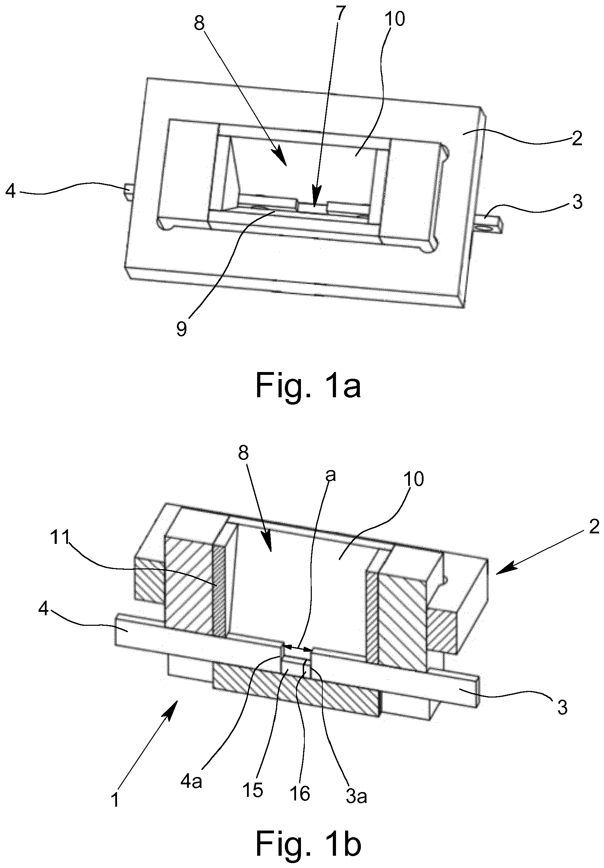

Fig. 1 zeigt eine vereinfachte Darstellung eines erfindungsgemäßen Überspannungsableiters 1, einmal eine perspektivischen Darstellung schräg von oben (Fig. 1a) und einmal eine perspektivische Darstellung schräg von der Seite eines längs aufgeschnittenen Überspannungsableiters 1 (Fig. 1b). Der Überspannungsableiter 1 weist ein Gehäuse 2 mit zwei einander axial gegenüberliegenden Elektroden 3, 4 und einer im Inneren des Gehäuses 2 ausgebildeten Lichtbogenbrennkammer 5 auf. Die vereinfachte Darstellung des Überspannungsableiters gemäß Fig. 1 zeigt dabei nur einen Teil des Gehäuses 2, wobei insbesondere der das Gehäuse 2 nach oben abschließende Gehäuseteil weggelassen ist, so dass ein Blick in die im Inneren des Gehäuses 2 ausgebildete Lichtbogenbrennkammer 5 möglich ist. Neben dem in den Figuren nur schematisch dargestellten Gehäuse 2 kann der Überspannungsableiter 1 zusätzlich auch noch ein Außengehäuse aufweisen, welches beispielsweise aus Stahl besteht, wodurch eine hohe Druckfestigkeit gewährleistet werden kann.

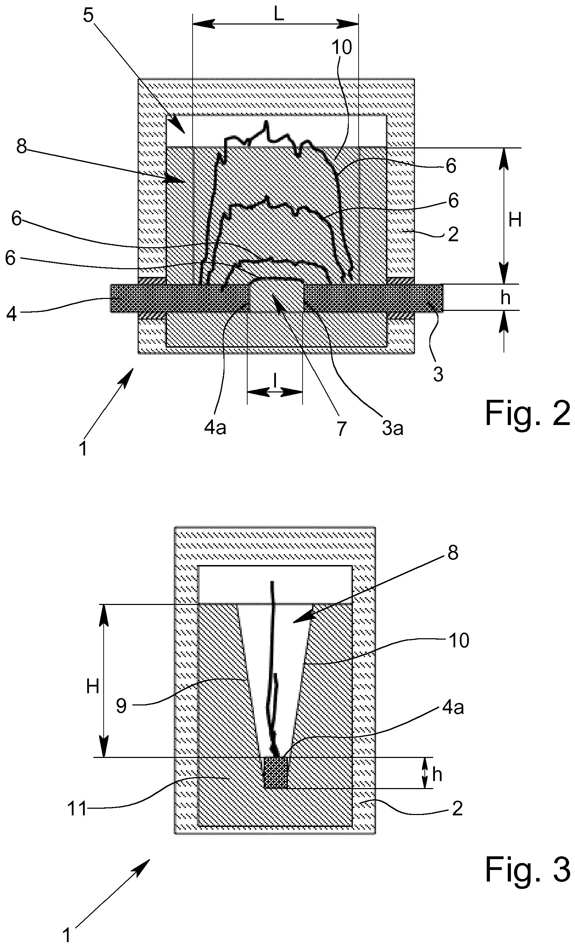

Zwischen den beiden Elektroden 3, 4 ist eine Funkenstrecke ausgebildet, so dass beim Zünden der Funkenstrecke zwischen den beiden Elektroden 3, 4 ein in den Fig. 2 bis 7 angedeuteter Lichtbogen 6 entsteht. Um das Auftreten eines Netzfolgestroms zu verhindern oder einen fließenden Netzfolgestrom möglichst schnell zu löschen, ist der axiale Abstand a zwischen den Stirnseiten 3a, 4a der beiden einander gegenüberliegenden Elektroden 3, 4 so groß gewählt, dass die Lichtbogenspannung U_{L} größer als die erwartete Netzspannung U_{N} ist. Der Abstand a zwischen den Stirnseiten 3a, 4a der beiden Elektroden 3, 4 kann dabei zwischen 5 mm und 20 mm betragen.

Aus den vereinfachten Darstellungen des erfindungsgemäßen Überspannungsableiters 1 ist erkennbar, dass die Lichtbogenbrennkammer 5 einen inneren Bereich 7 und einen Expansionsbereich 8 aufweist, in den sich ein anstehender Lichtbogen 6 nach dem Zünden ausbreiten kann. Wie beispielsweise aus Fig. 1b ersichtlich ist, geht der innere Bereich 7 der Lichtbogenbrennkammer 5, der zwischen den beiden Elektroden 3, 4 angeordnet ist und von deren Stirnseiten 3a, 4a axial begrenzt wird, in den wesentlich größeren Expansionsbereich 8 über, d. h. der innere Bereich 7 ist über seine ganze Längsseite und nicht nur über einen schmalen Kanal mit dem Expansionsbereich 8 verbunden. Insgesamt weist die Lichtbogenbrennkammer 5 somit ein wesentlich größeres Volumen auf, als die aus dem Stand der Technik bekannten Überspannungsableiter, bei denen die Lichtbogenbrennkammer in der Regel zylinderförmig ist, wobei der Durchmesser der Lichtbogenbrennkammer in der Regel den Abmessungen der Stirnseiten der Elektroden entspricht.

Bei dem erfindungsgemäßen Überspannungsableiter 1 sind zumindest die beiden Seitenwände 9, 10 des Expansionsbereichs 8 zumindest teilweise aus isolierendem Material 11. Vorzugsweise bestehen die Seitenwände insgesamt und darüber hinaus auch die Stirnseiten des Expansionsbereichs 8 aus isolierendem Material, so dass die Lichtbogenbrennkammer 5 insgesamt von isolierendem Material umgeben ist.

In Fig. 2 ist schematisch dargestellt, dass sich bei dem erfindungsgemäßen Überspannungsableiter 1 der Lichtbogen 6 in Abhängigkeit von der momentanen Stromstärke des abzuleitenden Stoßstromes unterschiedlich weit in den Expansionsbereich 8 der Lichtbogenbrennkammer 5 ausbreiten kann. Je größer die Amplitude des Stoßstromes ist, desto weiter wird sich dabei der Lichtbogen 6 in der Regel in den Expansionsbereich 8 der Lichtbogenbrennkammer 5 hinein ausbreiten. Dies wird dadurch ermöglicht, dass die Lichtbogenbrennkammer 5 nicht auf den inneren Bereich 7 zwischen den beiden Elektroden 3, 4 beschränkt ist, sondern mit dem Expansionsbereich 8 einen zusätzlichen, großen Bereich aufweist, der sich senkrecht zur Verbindungslinie zwischen den beiden Elektroden 3, 4 erstreckt, wodurch insgesamt ein relativ großvolumiger Isolierspalt bzw. Isolierraum für den Lichtbogen 6 zur Verfügung gestellt wird. Hierdurch wird die Möglichkeit geschaffen, dass sich der Lichtbogen 6 stets so innerhalb der Lichtbogenbrennkammer 5 ausbreitet, dass er eine energetisch möglichst günstige Form annimmt, so dass die Lichtbogenspannung bei einem Anstieg der Amplitude des Stoßstromes nicht oder nur relativ gering ansteigt. Damit wird eine Linearisierung der Lichtbogenspannung während des Ableitvorgangs erreicht, so dass auch der Energieumsatz innerhalb der Lichtbogenbrennkammer 5 möglichst gering ist.

Wie darüber hinaus insbesondere aus den Fig. 2 und 3 auch ersichtlich ist, weist der Expansionsbereich 8 eine Höhe H auf, die wesentlich größer als die Höhe h des inneren Bereichs 7 der Lichtbogenbrennkammer 5 ist. Außerdem weist gemäß den Fig. 1 und 2 der Expansionsbereich 8 eine Länge L auf, die größer als die Länge 1 des inneren Bereichs 7 ist, wobei die Länge 1 des inneren Bereichs dem Abstand a zwischen den Stirnseiten 3a, 4a der beiden Elektroden 3, 4 entspricht. Die beiden Elektroden 3, 4 ragen somit nicht nur mit ihren Stirnseiten 3a, 4a sondern mit einer entsprechenden Länge in die Lichtbogenbrennkammer 5 hinein, so dass die beiden Elektroden 3, 4 mit ihrer - in den Figuren oberen - Längsseite an den Expansionsbereich 8 angrenzen. Dadurch wird die Möglichkeit geschaffen, dass die Fußpunkte des Lichtbogens 6 - wie in Fig. 2 dargestellt - nach dem Zünden auf der Längsseite der beiden Elektroden 3, 4 nach außen wandern.

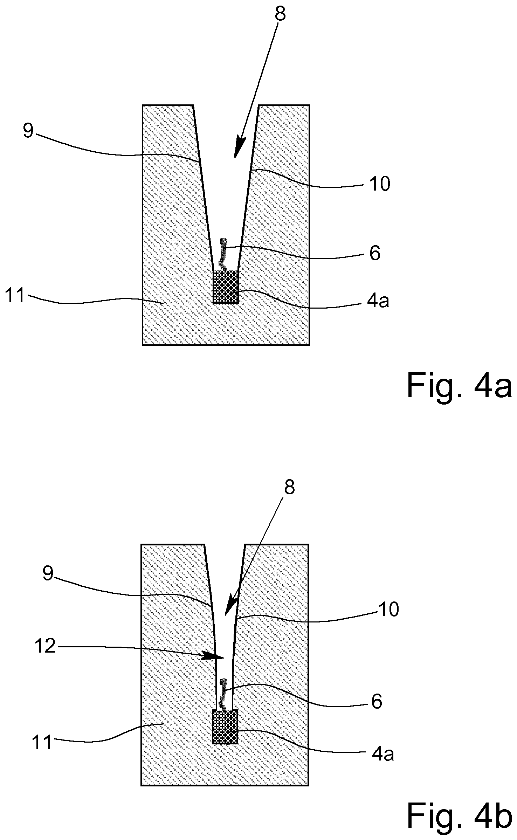

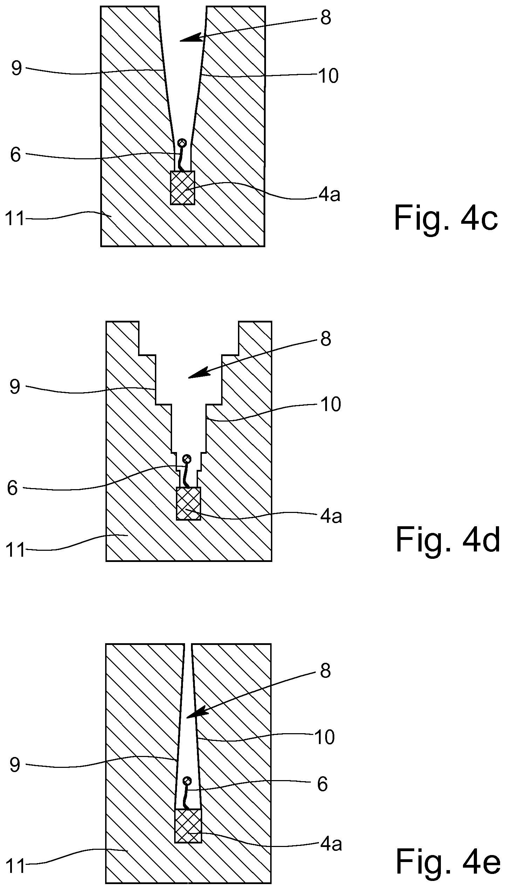

In Fig. 4 sind verschiedene Varianten der Lichtbogenbrennkammer 5 im Querschnitt dargestellt, die sich durch die Ausgestaltung des Expansionsbereichs 8 bzw. die Ausbildung der Seitenwände 9, 10 des Expansionsbereichs 8 voneinander unterscheiden. Bei den Varianten gemäß den Fig. 4a bis 4d weist der Expansionsbereich 8 jeweils im oberen Bereich eine größere Breite als im unteren Bereich auf. Die Erweiterung des Expansionsbereichs 8 kann dabei linear verlaufen (Fig. 4a), so dass der Expansionsbereich 8 einen etwa V-förmigen Querschnitt aufweist. Daneben ist auch ein bogenförmiger (Fig. 4b und 4c) oder ein stufenförmiger (Fig. d) Verlauf der Seitenwände 9, 10 möglich. Die beiden Ausführungsvarianten gemäß den Fig. 4b und 4c unterscheiden sich dabei dadurch, dass der Expansionsbereich 8 bei dem Ausführungsbeispiel gemäß Fig. 4b etwas oberhalb des inneren Bereichs 7 einen Bereich 12 aufweist, in dem der Abstand zwischen den Seitenwänden 9, 10 des Expansionsbereichs 8 verringert ist, während sich der Expansionsbereich 8 bei dem Ausführungsbeispiel gemäß Fig. 4c vom inneren Bereich 7 bis zu seinem oberen Rand kontinuierlich erweitert.

Fig. 4e zeigt ein Ausführungsbeispiel, bei dem sich der Expansionsbereich 8 im Querschnitt vom inneren Bereich 7 zu seinem oberen Ende hin verringert. Da auch bei diesem Ausführungsbeispiel der Expansionsbereich 8 eine größere Länge L als der innere Bereich 7 aufweist, ermöglicht auch eine derartige Ausgestaltung des Expansionsbereichs 8 bzw. der Lichtbogenbrennkammer 5 eine Aufweitung des Lichtbogens 6 bei einem Anstieg des abzuleitenden Stoßstromes. Der im oberen Teil des Expansionsbereich 8 realisierte geringere Abstand der beiden Seitenwände 9, 10 zueinander führt in diesem Bereich zu einer stärkeren Kühlung eines Lichtbogens 6, was einer weiteren Aufweitung des Lichtbogens 6 entgegenwirkt. Hierdurch wird eine zu große Verlängerung eines Lichtbogens 6, was mit einer Erhöhung der Lichtbogenspannung verbunden ist, verhindert.

Im Endeffekt bieten die in den Figuren dargestellten verschiedenen geometrischen Ausgestaltungen der Lichtbogenbrennkammer 5 alle die Möglichkeit, dass sich ein Lichtbogen 6 so in den Expansionsbereich 8 ausbreitet, dass er seine energetisch günstigste Form annimmt, so dass die Lichtbogenspannung auch bei einem Anstieg der Amplitude des abzuleitenden Stoßstromes näherungsweise konstant bleibt. Durch geeignete Dimensionierung der Lichtbogenbrennkammer 5, insbesondere durch eine entsprechende Wahl des axialen Abstands a zwischen den Stirnseiten 3a, 4a der beiden Elektroden 3, 4 kann dabei erreicht werden, dass die Lichtbogenspannung U_{L} stets etwas oberhalb der erwarteten Netzspannung U_{N} ist.

Da bei dem erfindungsgemäßen Überspannungsableiter 1 der Abstand a zwischen den Stirnseiten 3a, 4a der beiden Elektroden 3, 4 so groß gewählt ist, dass die Lichtbogenspannung U_{L} größer als die erwartete Netzspannung U_{N} ist, ist im Bereich der Lichtbogenbrennkammer 5 eine Zündhilfe vorgesehen, durch die die gewünschte Ansprechspannung des Überspannungsableiters 1 eingestellt werden kann. Bei dem in Fig. 1 dargestellten Ausführungsbeispiel besteht die Zündhilfe aus einem resistiven Bereich 15 und einem kurzen Isolationsbereich 16, wobei der resistive Bereich 15 auf der einen Seite mit der einen Elektrode 4 und auf der anderen Seite mit dem Isolationsbereich 16 verbunden ist. Darüber hinaus können jedoch auch andere Arten von - für sich aus dem Stand der Technik - bekannten Zündhilfen eingesetzt werden, die zu einer Zündung des Überspannungsableiters 1 bei der gewünschten Ansprechspannung führen.

## Patentansprüche

1. Überspannungsableiter zum Einsatz in der Stromversorgung von Niederspannungsnetzen, mit einem Gehäuse (2), mit zwei einander axial gegenüberliegenden Elektroden (3, 4), mit einer im Inneren des Gehäuses (2) ausgebildeten Lichtbogenbrennkammer (5) und mit einer Zündhilfe, wobei zwischen den beiden Elektroden (3, 4) eine Funkenstrecke ausgebildet ist, so dass beim Zünden der Funkenstrecke zwischen den beiden Elektroden (3, 4) ein Lichtbogen (6) entsteht, und
wobei der axiale Abstand a zwischen den Stirnseiten (3a, 4a) der beiden Elektroden (3, 4) so groß gewählt ist, dass die Lichtbogenspannung U_{L} größer als die erwartete Netzspannung U_{N} ist,
**dadurch gekennzeichnet,**
**dass** die Lichtbogenbrennkammer (5) einen inneren Bereich (7) und einen Expansionsbereich (8) aufweist, in den sich der Lichtbogen (6) nach dem Zünden ausbreiten kann,
wobei der innere Bereich (7) zwischen den beiden einander gegenüberliegenden Elektroden (3, 4) angeordnet ist und von den Stirnseiten (3a, 4a) der beiden Elektroden (3, 4) axial begrenzt ist,
wobei der Expansionsbereich (8) an eine Längsseite des inneren Bereichs (7) angrenzt und zumindest zwei Seitenwände (9, 10) des Expansionsbereichs (8) zumindest teilweise aus isolierendem Material (11) bestehen, und
wobei die dem Expansionsbereich (8) gegenüberliegende Längsseite des inneren Bereichs (7) geschlossen ist.

2. Überspannungsableiter nach Anspruch 2, **dadurch gekennzeichnet, dass** der Expansionsbereich (8) eine Höhe H aufweist, die größer als die Höhe h des inneren Bereichs (7) ist.

3. Überspannungsableiter nach Anspruch 2 oder 3, **dadurch gekennzeichnet, dass** der Expansionsbereich (8) eine Länge L aufweist, die größer als die Länge 1 des inneren Bereichs (7) ist, wobei mindestens eine Elektrode (3, 4) mit einer ihrer Längsseiten an den Expansionsbereich (8) angrenzt.

4. Überspannungsableiter nach einem der Ansprüche 1 bis 3, **dadurch gekennzeichnet, dass** sich der Expansionsbereich (8) im Querschnitt vom inneren Bereich (7) nach außen erweitert.

5. Überspannungsableiter nach einem der Ansprüche 1 bis 4, **dadurch gekennzeichnet, dass** die Seitenwände (9, 10) des Expansionsbereichs (8) derart ausgebildet sind, dass der Expansionsbereich (8) einen Bereich (12) aufweist, in dem der Abstand zwischen den Seitenwänden (9, 10) verringert ist.

6. Überspannungsableiter nach Anspruch 5, **dadurch gekennzeichnet, dass** sich der Bereich (12), in dem der Abstand zwischen den Seitenwänden (9, 10) verringert ist, im wesentlichen senkrecht zur Verbindungslinie zwischen den beiden Elektroden (3, 4) und über die ganze Höhe H des Expansionsbereichs (8) erstreckt, wobei der linien- oder bandförmige Bereich (12) vorzugsweise mittig zwischen den Stirnseiten (3a, 4a) der beiden Elektroden (3, 4) ausgebildet ist.

7. Überspannungsableiter nach einem der Ansprüche 1 bis 5, **dadurch gekennzeichnet, dass** die Seitenwände (9, 10) des Expansionsbereichs (8) zumindest teilweise ballig ausgebildet sind, so dass der Expansionsbereich (8) zumindest bereichsweise einen konkaven Querschnitt hat.

8. Überspannungsableiter nach einem der Ansprüche 1 bis 7, **dadurch gekennzeichnet, dass** in mindestens einer der Seitenwände (9, 10) des Expansionsbereichs (8) mindestens eine Öffnung (14) ausgebildet ist, durch die heißes ionisiertes Gas aus der Lichtbogenbrennkammer (5) ausströmen kann.

9. Überspannungsableiter nach einem der Ansprüche 1 bis 8, **dadurch gekennzeichnet, dass** die Seitenwände (9, 10) des Expansionsbereichs (8) zumindest bereichsweise aus einem harten, gasenden Isolierstoff, beispielsweise POM bestehen.

10. Überspannungsableiter nach einem der Ansprüche 1 bis 9, **dadurch gekennzeichnet, dass** die Zündhilfe einen resistiven Bereich (15) und einen kurzen Isolationsbereich (16) aufweist, wobei der resitive Bereich (15) auf der einen Seite mit der einen Elektrode (4) und auf der anderen Seite mit dem Isolationsbereich (16) verbunden ist.

11. Überspannungsableiter nach einem der Ansprüche 1 bis 10, **dadurch gekennzeichnet, dass** die Seitenwände (9, 10) des Expansionsbereichs (8) und des inneren Bereichs der Lichtbogenbrennkammer (5) außer im Bereich der Zündhilfe aus isolierendem Material (11) bestehen.

## Claims

1. Surge arrester for use in the power supply of low-voltage systems, with a housing (2), with two electrodes (3, 4) which are situated axially opposite one another, with an arc combustion chamber (5) which is formed in the interior of the housing (2), and with a trigger aid, wherein a spark gap is formed between the two electrodes (3, 4), so that an arc (6) is produced when the spark gap between the two electrodes (3, 4) is triggered, and
wherein the axial distance a between the end faces (3a, 4a) of the two electrodes (3, 4) is selected to be so large that the arc voltage U_{L} is greater than the expected line voltage U_{N},
**characterized in**
**that** the arc combustion chamber (5) has an inner region (7) and an expansion region (8) into which the arc (6) can propagate after triggering,
wherein the inner region (7) is arranged between the two electrodes (3, 4) which are situated opposite one another and is axially delimited by the end faces (3a, 4a) of the two electrodes (3, 4),
wherein the expansion region (8) adjoins a longitudinal side of the inner region (7), and at least two side walls (9, 10) of the expansion region (8) are at least partially composed of insulating material (11), and
wherein the longitudinal side of the inner region (7) situated opposite the expansion region (8) is closed.

2. Surge arrester according to claim 1, **characterized in that** the expansion region (8) has a height H which is greater than the height h of the inner region (7).

3. Surge arrester according to claim 1 or 2, **characterized in that** the expansion region (8) has a length L which is greater than the length 1 of the inner region (7), wherein at least one electrode (3, 4) adjoins the expansion region (8) with one of its longitudinal sides.

4. Surge arrester according to any one of the claims 1 to 3, **characterized in that** the expansion region (8), in cross section, expands from the inner region (7) outwards.

5. Surge arrester according to any one of the claims 1 to 4, **characterized in that** the side walls (9, 10) of the expansion region (8) are configured in a manner such that the expansion region (8) has a region (12) in which the distance between the side walls (9, 10) is reduced.

6. Surge arrester according to claim 5, **characterized in that** the region (12), in which the distance between the side walls (9, 10) is reduced, extends essentially perpendicularly to the connecting line between the two electrodes (3, 4) and over the entire height H of the expansion region (8), wherein the line- or ribbon-shaped region (12) is preferably centrally formed between the end faces (3a, 4a) of the two electrodes (3, 4).

7. Surge arrester according to any one of the claims 1 to 5, **characterized in that** the side walls (9, 10) of the expansion region (8) are formed at least partially spherically, so that the expansion region (8) has, at least in certain areas, a concave cross section.

8. Surge arrester according to any one of the claims 1 to 7, **characterized in that** at least one opening (14) is formed in at least one of the side walls (9, 10) of the expansion region (8), through which opening hot, ionized gas can flow out of the arc combustion chamber (5).

9. Surge arrester according to any one of the claims 1 to 8, **characterized in that** the side walls (9, 10) of the expansion region (8) are composed, at least in certain areas, of a hard gassing insulation material - for example, POM.

10. Surge arrester according to any one of the claims 1 to 9, **characterized in that** the trigger aid has a resistive area (15) and a short insulation area (16), wherein the resistive area (15) is connected on the one side to the one electrode (4) and on the other side to the insulation area (16).

11. Surge arrester according to any one of the claims 1 to 10, **characterized in that** the side walls (9, 10) of the expansion region (8) and the inner region (7) of the arc combustion chamber (5), except in the region of the trigger aid, are composed of insulating material (11).

## Revendications

1. Parafoudre destiné à être utilisé dans l'alimentation en courant de réseaux à basse tension, le parafoudre comprenant un boîtier (2), deux électrodes (3, 4) opposées axialement, une chambre de combustion à l'arc (5) formée à l'intérieur du boîtier (2) et un auxiliaire d'allumage, un éclateur étant formé entre les deux électrodes (3, 4) de sorte que, lors de l'allumage de l'éclateur, un arc (6) soit généré entre les deux électrodes (3, 4), et
la distance axiale a entre les côtés frontaux (3a, 4a) des deux électrodes (3, 4) étant choisie de telle sorte que la tension d'arc U_{L} soit supérieure à la tension de réseau attendue U_{N},
**caractérisé en ce que**
la chambre de combustion à arc (5) comporte une région intérieure (7) et une région d'expansion (8) dans lesquelles l'arc (6) peut se propager après l'allumage,
la région intérieure (7) étant disposée entre les deux électrodes (3, 4) opposées l'une à l'autre et étant délimitée axialement par les côtés frontaux (3a, 4a) des deux électrodes (3, 4),
la région d'expansion (8) étant adjacente à un côté longitudinal de la région intérieure (7) et au moins deux parois latérales (9, 10) de la région d'expansion (8) étant au moins partiellement en matériau isolant (11), et
le côté longitudinal de la région intérieure (7), qui est opposé à la région d'expansion (8), étant fermé.

2. Parafoudre selon la revendication 1, **caractérisé en ce que** la région d'expansion (8) a une hauteur H supérieure à la hauteur h de la région intérieure (7).

3. Parafoudre selon la revendication 1 ou 2, **caractérisé en ce que** la région d'expansion (8) a une longueur L supérieure à la longueur 1 de la région intérieure (7), au moins une électrode (3, 4) étant adjacente par l'un de ses côtés longitudinaux à la région d'expansion (8).

4. Parafoudre selon l'une des revendications 1 à 3, **caractérisé en ce que** la région d'expansion (8) s'élargit, en coupe transversale, de la région intérieure (7) vers l'extérieur.

5. Parafoudre selon l'une des revendications 1 à 4, **caractérisé en ce que** les parois latérales (9, 10) de la région d'expansion (8) sont formées de telle sorte que la région d'expansion (8) comporte une région (12) dans laquelle la distance entre les parois latérales (9, 10) est réduite.

6. Parafoudre selon la revendication 5, **caractérisé en ce que** la région (12) dans laquelle la distance entre les parois latérales (9, 10) est réduite, s'étend sensiblement perpendiculairement à la ligne de liaison entre les deux électrodes (3, 4) et sur la hauteur totale H de la région d'expansion (8), la région (12) en forme de ligne ou de bande étant de préférence formée centralement entre les côtés frontaux (3a, 4a) des deux électrodes (3, 4).

7. Parafoudre selon l'une des revendications 1 à 5, **caractérisé en ce que** les parois latérales (9, 10) de la région d'expansion (8) sont au moins partiellement bombées de sorte que la région d'expansion (8) a au moins en partie une section concave.

8. Parafoudre selon l'une des revendications 1 à 7, **caractérisé en ce qu'**au moins une ouverture (14), par laquelle du gaz ionisé chaud peut sortir de la chambre de combustion à arc (5), est formée dans l'une au moins des parois latérales (9, 10) de la zone d'expansion (8).

9. Parafoudre selon l'une des revendications 1 à 8, **caractérisé en ce que** les parois latérales (9, 10) de la chambre d'expansion (8) sont au moins en partie constituées d'un matériau isolant dur dégazant tel que le POM.

10. Parafoudre selon l'une des revendications 1 à 9, **caractérisé en ce que** l'auxiliaire d'allumage comporte une région résistive (15) et une région isolante courte (16), la région résistive (15) étant reliée d'un côté à l'électrode (4) et de l'autre côté à la région isolante (16).

11. Parafoudre selon l'une des revendications 1 à 10, **caractérisé en ce que** les parois latérales (9, 10) de la région d'expansion (8) et de la région intérieure (7) de la chambre de combustion à arc (5) sont, sauf dans la zone de l'auxiliaire d'allumage, en matériau isolant (11).
